(19) Europäisches Patentamt
European Patent Office
Office européen des brevets

(11) **EP 2 728 304 B1**

(12) **EUROPEAN PATENT SPECIFICATION**

(45) Date of publication and mention
of the grant of the patent:
**19.04.2017 Bulletin 2017/16**

(51) Int Cl.:
***G01B 11/00*** *(2006.01)*  ***B60M 1/28*** *(2006.01)*
***G01B 11/02*** *(2006.01)*

(21) Application number: **12804295.9**

(22) Date of filing: **18.06.2012**

(86) International application number:
**PCT/JP2012/065453**

(87) International publication number:
**WO 2013/002047 (03.01.2013 Gazette 2013/01)**

(54) **TROLLEY WIRE ABRASION MEASURING APPARATUS USING IMAGE PROCESS**

VORRICHTUNG ZUR MESSUNG DES ABRIEBS VON OBERLEITUNGEN MITTELS BILDVERARBEITUNG

APPAREIL POUR MESURER L'ABRASION DE FILS MÉTALLIQUES DE CHARIOT UTILISANT UN PROCÉDÉ D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2011 JP 2011146710**

(43) Date of publication of application:
**07.05.2014 Bulletin 2014/19**

(73) Proprietor: **Meidensha Corporation**
**Tokyo 141-6029 (JP)**

(72) Inventors:
• **MATSUBARA Kazutaka**
**Tokyo 141-6029 (JP)**
• **WATABE Yusuke**
**Tokyo 141-6029 (JP)**
• **KATO Kenji**
**Numazu-shi**
**Shizuoka 410-0865 (JP)**

(74) Representative: **Strehl Schübel-Hopf & Partner**
**Maximilianstrasse 54**
**80538 München (DE)**

(56) References cited:
EP-A1- 2 071 277      EP-A1- 2 151 667
DE-A1-102009 057 877   JP-A- 2002 133 413
JP-A- 2004 045 356     JP-A- 2009 274 508
JP-A- 2010 127 746

**Description**

TECHNICAL FIELD

The present invention relates to a trolley wire wear measuring apparatus using image processing, or more specifically, to a trolley wire wear measuring apparatus using image processing configured to perform wear measurement robustly against various backgrounds in the daytime.

BACKGROUND ART

A conventional trolley wire wear measuring apparatus using image processing is configured to perform binarization processing on an image acquired from a line sensor; reverse, as a sky portion, each white region larger in size than a thickness parameter of the trolley wire into a black region; extract only a trolley wire worn surface; and perform the trolley wire wear measurement (see Patent Document 1, for example).

In addition, there is an apparatus configured to further perform binarization processing on the image remaining after the sky portions are removed in the method described in Patent Document 1, and thereby to separate side surfaces of the trolley wire from the worn surface thereof. Thus, even when the trolley wire worn surface appears relatively dark in the image, the apparatus extracts only the trolley wire worn surface and perform the trolley wire wear measurement (see Patent Document 2, for example).

Meanwhile, there is also an apparatus designed to set a mask on the basis of a preset gray scale threshold such that background portions can be excluded from a processing target (see Patent Document 3, for example).

PRIOR ART DOCUMENTS

PATENT DOCUMENTS

Patent Document 1: Japanese Patent Application Publication No. 2007-271445
Patent Document 2: Japanese Patent Application Publication No. 2008-089524
Patent Document 3: Japanese Patent Application Publication No. 2006-250775

SUMMARY OF THE INVENTION

PROBLEMS TO BE SOLVED BY THE INVENTION

The apparatuses described in Patent Documents 1 and 2 are configured to separate the trolley wire and the background from each other by using the fact that most of the background portion turns into a white region after the binary processing. Nevertheless, if the background includes a captured object other than the trolley wire (such as a roof or an overhead line structure; hereinafter simply referred to as an "captured object") or a brightness patch (such as a shade attributed to a change in weather, a cloud or the like; hereinafter simply referred to as a "brightness patch"), the binarized background portion may also have black pixels. Hence, the apparatus may fail to separate the trolley wire and the background from each other through the binarization processing.

Meanwhile, according to the invention described in Patent Document 3, the background is masked on the basis of the given gray scale threshold and thereby is covered with the mask. However, if a captured object or a brightness patch exists in the background poses, the apparatus may fail to mask a background region properly by using the given gray scale threshold and to separate the trolley wire and the background from each other.

As described above, if a captured object or a brightness patch exists in the background, the conventional methods cannot accurately separate the trolley wire and the background from each other by binarizing the image.

In view of the above, an objective of the present invention is to provide a trolley wire wear measuring apparatus using image processing, which is capable of eliminating effects of a captured object other than a trolley wire or a brightness patch captured in a background of an image acquired from a line sensor camera, thereby separating a trolley wire and the object other than the trolley wire from each other, and thus reducing erroneous detection of a trolley wire worn surface.

MEANS FOR SOLVING THE PROBLEMS

The above objective is met by the wear measuring apparatus defined in the present independent claims. The dependent claims relate to preferred embodiments.

EFFECT OF THE INVENTION

The above-described trolley wire wear measuring apparatus using image processing according to claim 1 includes: the line sensor camera installed on the roof of the vehicle with its scan line direction set horizontal and perpendicular to the traveling direction of the vehicle and configured to shoot the trolley wire; the illuminating means also installed on the roof of the vehicle and configured to illuminate the trolley wire; and the image processing means installed inside the vehicle. Here, the image processing means comprises: the line sensor image creating means configured to create the line sensor image in which the image signal inputted from the line sensor camera are arranged in time series; the background separation processing means configured to separate the inputted image into the trolley wire and the background; the binarization processing means configured to perform the binarization processing on the inputted image to create the binarized image; the trolley wire worn section edge detecting means configured to detect the edges on the two sides of the worn section of the trolley wire from the inputted image; and the trolley wire worn section width calculating means configured to detect the amount of wear of the trolley wire using the positions of the edges on the two sides of the worn section. Thus, the apparatus can separate the trolley wire worn surface and the background from each other and reduce erroneous detection of the trolley wire worn surface.

According to the above-described trolley wire wear measuring apparatus of present claim 1 , the background separation processing means is the GSTH processing means configured to perform the GSTH processing on the inputted image to create the GSTH image in which the worn section of the trolley wire in the image is emphasized. Thus, it is possible to reduce erroneous detection of the trolley wire worn surface by emphasizing the trolley wire worn surface in the inputted image by performing the GSTH processing on the inputted image, while removing an object captured in the background.

In addition, according to the trolley wire wear measuring apparatus using image processing of claim 2 , the GSTH processing means performs the GSTH processing on the line sensor image to create the GSTH image in which the worn section of the trolley wire in the line sensor image is emphasized. Then, the binarization processing means performs the binarization processing on the GSTH image to create the binarized image, and the trolley wire worn section edge detecting means detects the edges from the binarized image. Thus, even when the trolley wire worn surface appears dark in the inputted image, the execution of the GSTH processing before performing the binarization processing makes it possible to emphasize the trolley wire worn surface and thus to separate the worn surface from the background.

According to the trolley wire wear measuring apparatus using image processing of claim 3, the background separation processing means is the standard deviation background removal processing means configured to divide the inputted image into the arbitrary segments and perform the standard deviation background removal processing on each of the segments, thereby creating the background removed image. Here, the standard deviation background removal processing includes: for each segment, judging whether or not the target object is captured in the segment; when the target object is captured in the segment and the target object is not captured in its neighboring segment, regarding the region between the neighboring segment and the target object as the background; and when the target object is not captured in the segment and the target object is captured in its neighboring segment, regarding the segment and a region between the target object in the neighboring segment and the segment as the background. Thus, even when there is a brightness patch in the background of the inputted image, the trolley wire can be identified by performing the standard deviation background removal processing on the inputted image. Hence, it is possible to reduce erroneous detection of the trolley wire worn surface.

According to the trolley wire wear measuring apparatus using image processing of claim 4, when the region not regarded as the background exists in one of the segments subjected to the standard deviation background removal processing, the standard deviation background removal processing means subdivides the certain segment into the subdivided segments and performs the standard deviation background removal processing on each of the subdivided segments, thereby creating the background removed image. Here, the standard deviation background removal processing includes: for each of the subdivided segments, judging whether or not the target object is captured in the segment; when the target object is captured in the segment and the target object is not captured in its neighboring segment, regarding the region between the neighboring segment and the target object as the background; and when the target object is not captured in the segment and the target object is captured in its neighboring segment, regarding the segment as well as the region between the target object in the neighboring segment and the segment as the background. Thus, the target object and the background can reliably be separated from each other.

According to the trolley wire wear measuring apparatus using image processing of claim 5, each arbitrary segment has the size that does not allow the target object to exist across the boundary between the continuous segments. Thus, the target object and the background can be separated from each other by performing the processing just once.

According to the trolley wire wear measuring apparatus using image processing of claim 6, the standard deviation background removal processing means performs the standard deviation background removal processing on the line sensor image to create the background removed image which includes the trolley wire extracted from the line sensor image. Then, the binarization processing means performs the binarization processing on the background removed image to create the binarized image, and the trolley wire worn section edge detecting means detects the edges from the binarized image. Thus, even when there is a brightness patch in the background of the inputted image, the trolley wire can be clearly identified by performing the standard deviation background removal processing before performing the binarization processing.

According to the trolley wire wear measuring apparatus using image processing of claim 7, the image processing means further comprises the standard deviation background removal processing means, as the background separation processing means, configured to divide the inputted image into the arbitrary segments and perform the standard deviation background removal processing on each of the segments, thereby creating the background removed image. Here, the standard deviation background removal processing includes: for each of the segments, judging whether or not the target object is captured in the segment; when the target object is captured in the segment and the target object is not captured in its neighboring segment, regarding the region between the neighboring segment and the target object; and when the target object is not captured in the segment and the target object is captured in its neighboring segment, regarding the segment and a region between the target object in the neighboring segment and the segment as the background. Thus, it is possible to further reduce erroneous detection of the trolley wire worn surface by using the GSTH processing and the standard deviation background removal processing in combination.

According to the trolley wire wear measuring apparatus using image processing of claim 8, when the region not regarded as the background exists in one of the segments subjected to the standard deviation background removal processing, the standard deviation background removal processing means subdivides the segment into subdivided segments and performs the standard deviation background removal processing on each of the subdivided segments, thereby creating the background removed image. Here, the standard deviation background removal processing includes: for each of the subdivided segment, judging whether or not the target object is captured in the segment; when the target object is captured in the segment and the target object is not captured in its neighboring segment, regarding a region between the neighboring segment and the target object as the background; and when the target object is not captured in the segment and the target object is captured in its neighboring segment, regarding the segment and a region between the target object in the neighboring segment and the segment as the background. Thus, the target object and the background can reliably be separated from each other.

According to the trolley wire wear measuring apparatus using image processing of claim 9, each arbitrary segment has the size that does not allow the target object to exist across the boundary between the continuous segments. Thus, the target object and the background can be separated from each other by performing the processing just once.

According to the trolley wire wear measuring apparatus using image processing of claim 10, the GSTH processing means performs the GSTH processing on the line sensor image to create the GSTH image in which the worn section of the trolley wire in the line sensor image is emphasized. Then, the standard deviation background removal processing means performs the standard deviation background removal processing on the GSTH image to create the background removed image which includes the trolley wire extracted from the GSTH image. Thereafter, the binarization processing means performs the binarization processing on the background removed image to create the binarized image, and the trolley wire worn section edge detecting means detects the edges from the binarized image. Thus, it is possible to further improve accuracy of the trolley wire wear measurement by subjecting the line sensor image to the GSTH processing and then to the standard deviation background removal processing.

BRIEF DESCRIPTION OF THE DRAWINGS

[Fig. 1] Fig. 1 is a schematic diagram showing an example of the installation of a trolley wire wear measuring apparatus using image processing according to a first embodiment of the present invention.

[Fig. 2] Fig. 2 is a block diagram showing a schematic configuration of a measurement computer of the trolley wire wear measuring apparatus using image processing according to the first embodiment of the present invention.

[Fig. 3] Figs. 3(a) and 3(b) are explanatory views showing an example of erosion processing in the first embodiment of the present invention.

[Fig. 4] Figs. 4(a) and 4(b) are explanatory views showing an example of dilation processing in the first embodiment of the present invention.

[Fig. 5] Fig. 5 is an explanatory view showing an example of a GSTH image in the first embodiment of the present invention.

[Fig. 6] Fig. 6 is a flowchart showing a flow of trolley wire wear measurement processing according to the first embodiment of the present invention.

[Fig. 7] Fig. 7 is an explanatory view showing an example of a line sensor image according to the first embodiment of the present invention.

[Fig. 8] Fig. 8 is an explanatory view showing an example of an eroded image according to the first embodiment of the present invention.

[Fig. 9] Fig. 9 is an explanatory view showing an example of an opening image according to the first embodiment of the present invention.

[Fig. 10] Fig. 10 is an explanatory view showing an example of the GSTH image according to the first embodiment of the present invention.

[Fig. 11] Fig. 11 is an explanatory view showing an example of a binarized image according to the first embodiment of the present invention.

[Fig. 12] Fig. 12 is an explanatory view showing an example of edge extraction according to the first embodiment of the present invention.

[Fig. 13] Fig. 13 is a block diagram showing a schematic configuration of a measurement computer of a trolley wire wear measuring apparatus using image processing according to a second embodiment of the present invention.

[Fig. 14] Figs. 14 (a) to 14 (d) are explanatory views showing an example of standard deviation background removal processing according to the second embodiment of the present invention.

[Fig. 15] Figs. 15 (a) to 15 (d) are explanatory views showing another example of the standard deviation background removal processing according to the second embodiment of the present invention.

[Fig. 16] Fig. 16 is a flowchart showing a flow of trolley wire wear measurement processing according to the second embodiment of the present invention.

[Fig. 17] Fig. 17 is a block diagram showing a schematic configuration of a measurement computer of a trolley wire wear measuring apparatus using image processing according to a third embodiment of the present invention.

[Fig. 18] Fig. 18 is a flowchart showing a flow of trolley wire wear measurement processing according to the third embodiment of the present invention.

MODE FOR CARRYING OUT THE INVENTION

A trolley wire wear measuring apparatus using image processing according to the present invention will be described below in detail with reference to the drawings.

FIRST EMBODIMENT

(GSTH Processing)

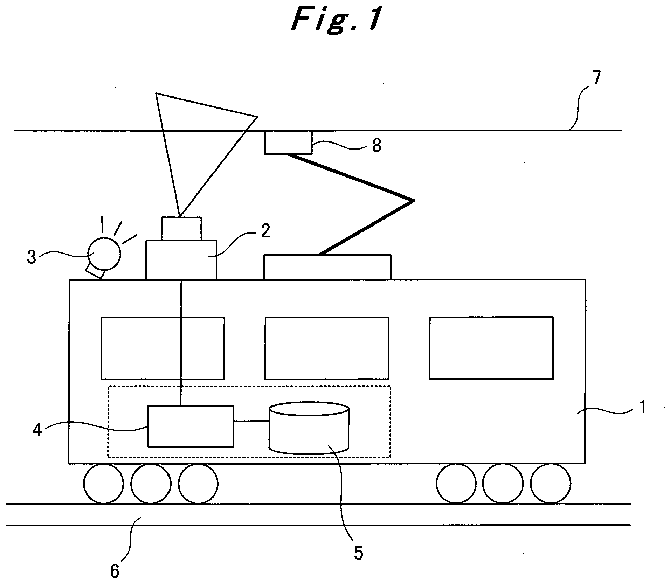

A first embodiment of a trolley wire wear measuring apparatus using image processing according to the present invention will be described by using Fig. 1 to Fig. 12. This embodiment is designed to remove an object other than a trolley wire captured on a background by performing gray scale-top hat processing (hereinafter referred to as "GSTH processing").

As shown in Fig. 1, a line sensor camera 2 and lighting device 3 are installed on a roof of a vehicle 1 in this embodiment. In addition, a measurement computer 4 and a recording device 5 are disposed inside the vehicle 1.

The direction of the line sensor camera 2 is set in order that: the line sensor camera 2 can shoot vertically upward; and its scan line direction is aligned with a direction of railroad ties provided for rails 6, or in other words, with a direction orthogonal to a traveling direction of the vehicle 1. Thus, the scan line of the line sensor camera 2 intersects a trolley wire 7.

The lighting device 3 is installed to illuminate a worn section (i.e., a surface coming into contact with a pantograph 8) of the trolley wire 7 to be shot with the line sensor camera 2.

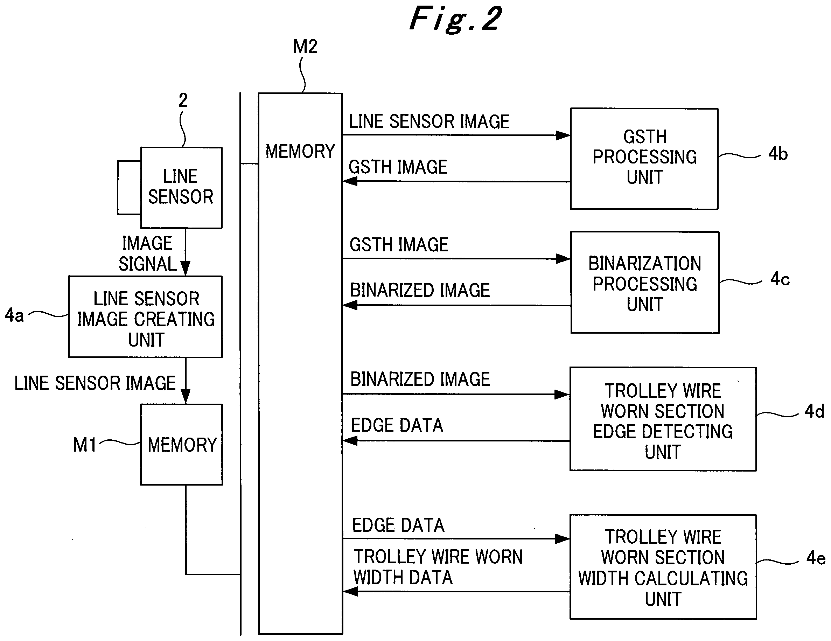

Meanwhile, as shown in Fig. 2, the measurement computer 4 includes a line sensor image creating unit 4a as line sensor image creating means, a GSTH processing unit 4b as background separation processing means, a binarization processing unit 4c as binarization processing means, a trolley wire worn section edge detecting unit 4d as trolley wire worn section edge detecting means, and a trolley wire worn section width calculating unit 4e as trolley wire worn section width calculating means.

The line sensor image creating unit 4a creates a line sensor image (an image of a plane) by arranging image signals (luminance signals of scan lines), which are inputted from the line sensor, in time series. The created line sensor image is inputted into the GSTH processing unit 4b via memories M1, M2.

The GSTH processing unit 4b performs the GSTH processing on the inputted line sensor image.

The line sensor image subjected to the GSTH processing (hereinafter referred to as a GSTH image) by the GSTH processing unit 4b is inputted into the binarization processing unit 4c via the memory M2.

As suggested by the name, the GSTH processing is intended to perform top hat processing on a gray scale image. The top hat processing is processing to subtract an image that undergoes opening (processing by erosion a certain number of times and subsequent dilation the same number of times) from an original image.

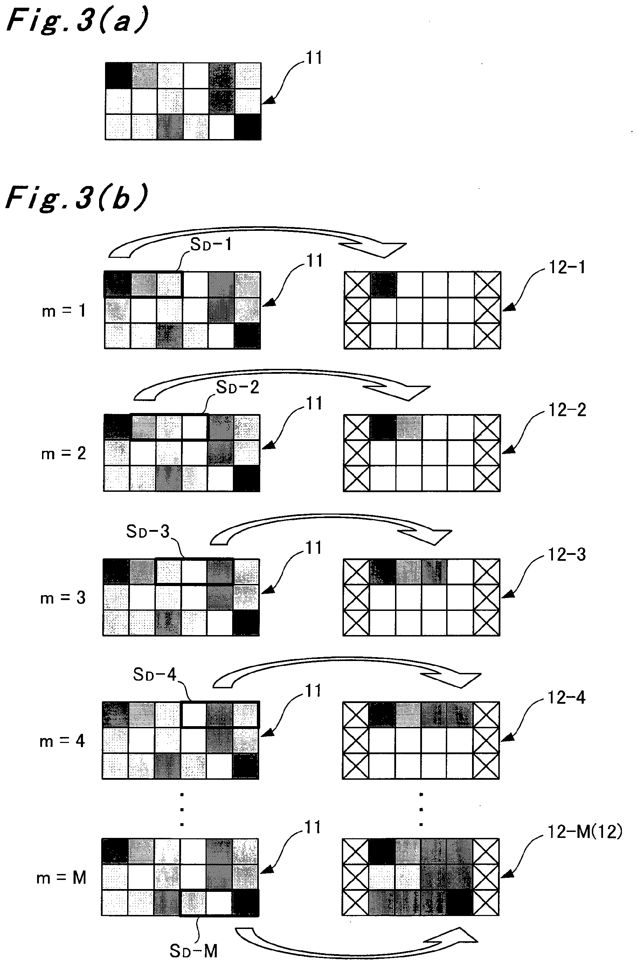

The GSTH processing by the GSTH processing unit 4b will be described below in detail by using Fig. 3(a) to Fig. 5. The GSTH processing unit 4b performs the processing in the following flow.

(1) As shown in Fig. 3(b), for a range (hereinafter referred to as a search range) SD-1 of N pixels (three pixels in Fig. 3(b)) in an original image 11 illustrated in Fig. 3(a), a luminance value of the darkest pixel is written in a separate buffer (hereinafter referred to as an erosion processing buffer) 12-1.

(2) The search range is then shifted (to search ranges SD-2 to SD-M in Fig. 3(b)). For each of the search ranges SD-2 to SD-M, a luminance value of the darkest pixel is written in a corresponding one of the erosion processing buffers 12-2 to 12-M.

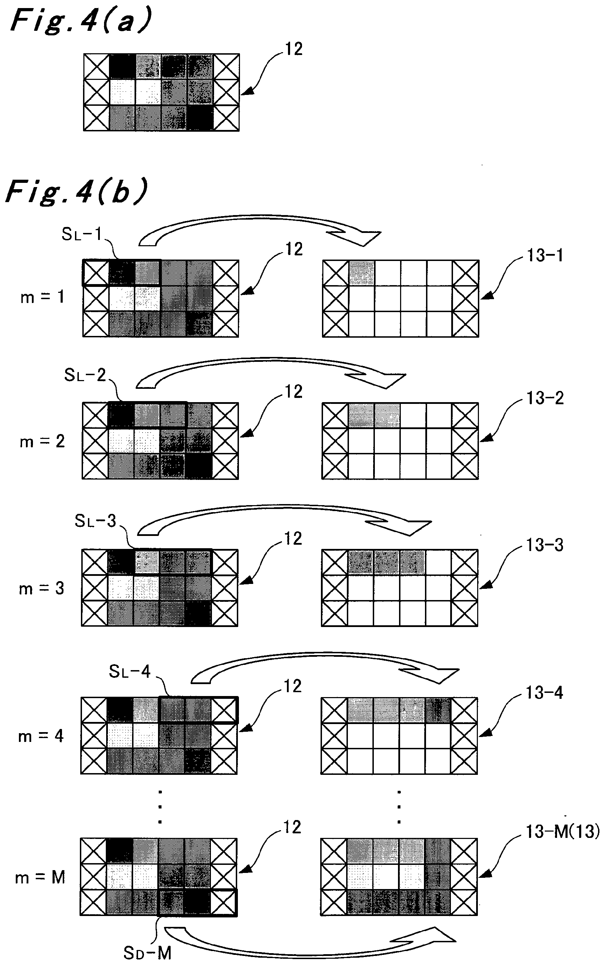

(3) Thus, an eroded image 12 shown in Fig. 4 (a) is created.

(4) Subsequently, as shown in Fig. 4(b), for a range (hereinafter a "search range") SL-1 of N pixels (three pixels in this embodiment) in the eroded image 12, a luminance value of the brightest pixel is written in a separate buffer (hereinafter referred to as a dilation processing buffer) 13-1.

(5) The search range is then shifted (to search ranges 13-2 to 13-M in Fig. 4(b)). For each of the search ranges SL-2 to SL-M, a luminance value of the brightest pixel is written in a corresponding one of the dilation processing buffers 13-2 to 13-M.

(6) Thus, an opening image 13 is created.

(7) Subsequently, the opening image 13 created in section (6) is subtracted from the original image 11.

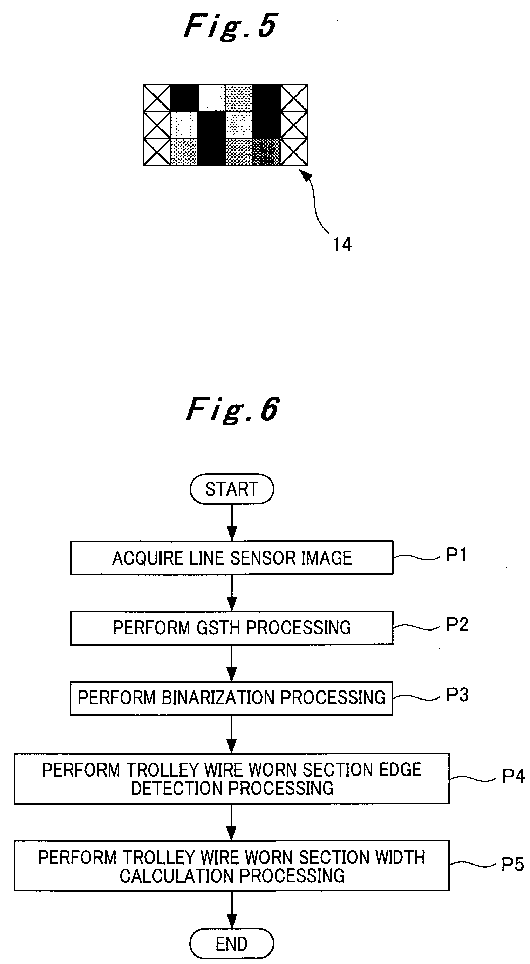

The execution of the processing described above provides a GSTH image 14 in which bright pixels surrounded by dark portions in the image are emphasized as shown in Fig. 5.

The binarization processing unit 4c performs binarization processing on the inputted GSTH image 14, thereby creating a binarized image. The created binarized image is inputted into the trolley wire worn section edge detecting unit 4d via the memory M2.

The trolley wire worn section edge detecting unit 4d subjects the inputted binarized image to such processing that detects a point where black turns into white when searching a certain line from the left side, for example, as an edge point on the left side, and subsequently detects a point where white turns into black as an edge point on the right side. This processing is performed on each line of the image from the top to the bottom. The information on the detected edge points (hereinafter referred to as edge data) is inputted into the trolley wire worn section width calculating unit 4e via the memory M2.

The trolley wire worn section width calculating unit 4e calculates a width between the right and left edges on the line sensor image on the basis of the inputted edge data, and then converts the width into an actual amount of wear of the trolley wire 7. The calculated amount of wear of the trolley wire 7 is inputted as trolley wire worn width data into the recording device 5 via the memory M2.

In addition to the trolley wire worn width data mentioned above, the line sensor image, the GSTH image, the binarized image, the edge data, and the like are recorded in the recording device 5 via the memories M1, M2.

A flow of image processing by the measurement computer 4 of the trolley wire wear measuring apparatus using image processing of this embodiment will be described by using Fig. 6 to Fig. 12.

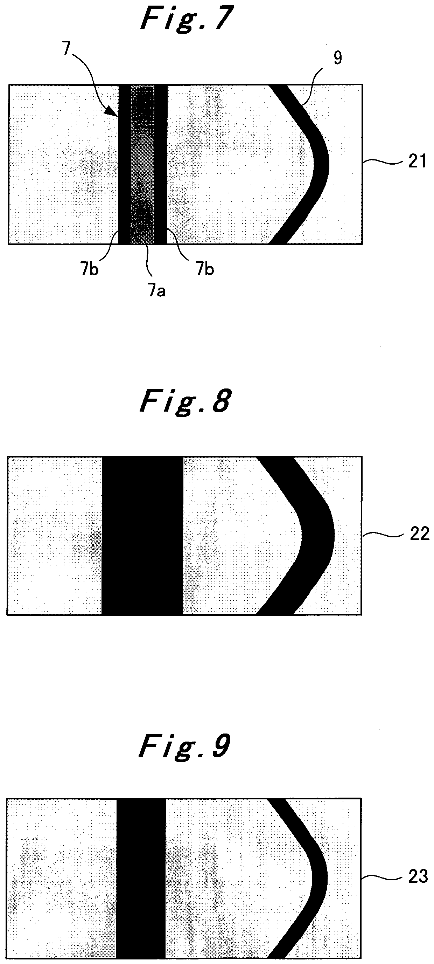

As shown in Fig. 6, the measurement computer 4 of this embodiment first causes the line sensor image creating unit 4a to perform the processing to create a line sensor image 21 as shown in Fig. 7 by arranging image signals, which are inputted from the line sensor camera 2, in time series (step P1).

Here, in addition to the trolley wire 7, the line sensor image 21 created by the line sensor image creating unit 4a may capture an object 9 other than the trolley wire 7, such as a roof or an overhead line structure as shown in Fig. 7.

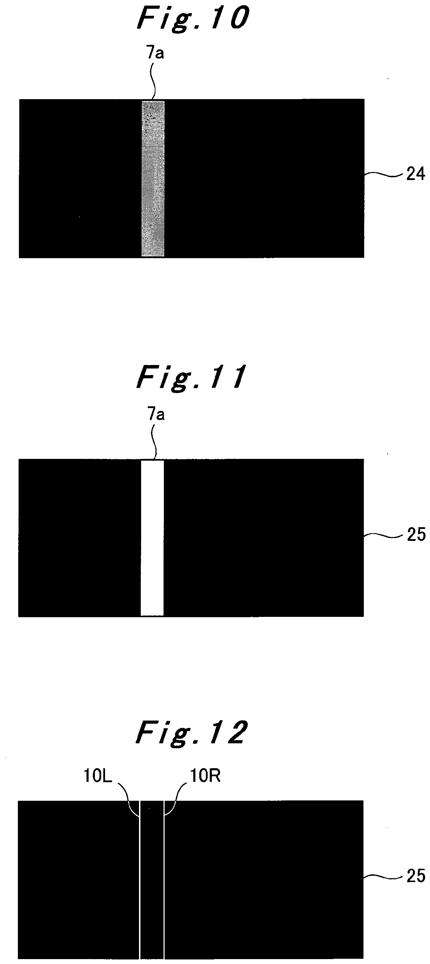

Following step P1, the GSTH processing unit 4b performs the above-described GSTH processing on the line sensor image 21 (step P2). Specifically, an eroded image 22 as shown in Fig. 8 is acquired by performing the processing described above in sections (1) and (2) on the line sensor image 21. Then, an opening image 23 as shown in Fig. 9 is acquired by performing the processing described above in sections (4) and (5) on the eroded image 22, and the processing to subtract the opening image 23 from the line sensor image 21 is carried out. Thus, a GSTH image 24 as shown in Fig. 10 is obtained. It is apparent from Fig. 10 that, in the GSTH image 24, only a worn section (hereinafter referred to as a trolley wire worn section) 7a of the trolley wire 7 is emphasized in comparison with the line sensor image 21 while the object 9 other than the trolley wire 7 captured in the background is removed therefrom.

Following step P2, the binarization processing unit 4c performs the binarization processing on the GSTH image 24 (step P3). It is thus possible to obtain a binarized image 25 in which only the trolley wire worn surface 7a is extracted as shown in Fig. 11.

Following step P3, the trolley wire worn section edge detecting unit 4d performs the processing to extract boundaries between the black representing the background and the white representing the trolley wire worn surface 7a in the binarized image 25, respectively as left and right edge points 10L, 10R as shown in Fig. 12 (step P4). Thus, the edge data can be obtained.

Following step P4, the trolley wire worn section width calculating unit 4e performs the processing to calculate a distance between the left and right edge points 10L, 10R as the width of the trolley wire worn surface 7a on the image, and then to convert this width into the actual amount of wear of the trolley wire 7 (step P5).

The measurement computer 4 of this embodiment can measure the amount of wear of the trolley wire 7 by performing the above-described processing.

The trolley wire worn surface 7a appears bright because the surface reflects the illumination intensely, whereas side surfaces (hereinafter referred to as trolley wire side surfaces) 7b of the trolley wire 7 appear black due to rust, soot, and the like. In other words, the trolley wire worn surface 7a has a characteristic of being represented in the form of bright pixels surrounded by dark portions, and is therefore emphasized as a result of the GSTH processing. In the meantime, the object 9 captured in the background portion appears black on the line sensor image 21 and is not represented in the form of bright pixels surrounded by dark portions. Hence, the object 9 becomes less noticeable as a consequence of the GSH processing.

In addition, since the GSTH processing is performed before performing the binarization processing, the erosion processing and the dilation processing are performed on the gray scale image. Thus, the trolley wire worn surface 7a and the background can be separated from each other even in the case of an image in which the trolley wire worn surface 7a is relatively dark. On the other hand, if the binarization processing is performed directly on the image in which the trolley wire worn surface 7a is relatively dark, the trolley wire worn surface 7a may be processed into black and merged with the background.

According to the trolley wire wear measuring apparatus using image processing of the above-described embodiment, the trolley wire worn surface 7a and the background can be separated from each other even when there is the object 9 other than the trolley wire 7 captured in the background. Thus, erroneous detection of the trolley wire worn surface 7a can be reduced.

In addition, the erosion processing and the dilation processing are performed on the gray scale image instead of an image subjected to the binarization processing. Accordingly, the trolley wire worn surface 7a and the background can be separated from each other even in the case of the image in which the trolley wire worn surface 7a is relatively dark.

SECOND EMBODIMENT

(Standard Deviation Background Removal)

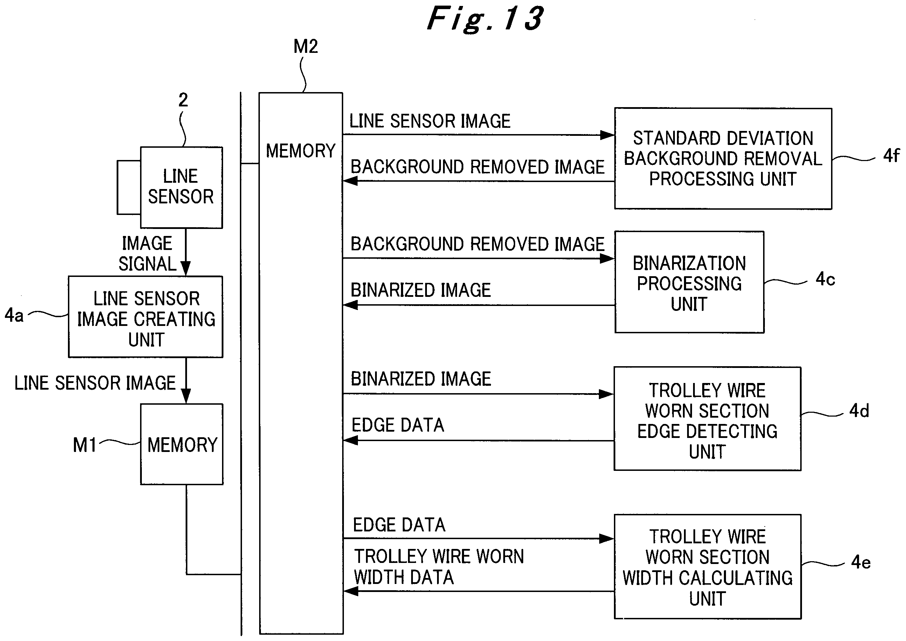

A second embodiment of the trolley wire wear measuring apparatus using image processing according to the present invention will be described by using Fig. 13 to Fig. 16. This embodiment is designed to remove a brightness patch in a background by determining a region having uniform luminance while using standard deviation.

This embodiment employs a standard deviation background removal processing unit 4f shown in Fig. 13 instead of the GSTH processing unit 4b of the above-described first embodiment. The rest of the configuration is substantially the same as the above-described configuration shown in Fig. 1 and Fig. 2. In the following, similar components will be denoted by the same reference numerals and overlapped descriptions will be omitted. Instead, different features will mainly be described below.

As shown in Fig. 13, the measurement computer 4 includes the line sensor image creating unit 4a, the standard deviation background removal processing unit 4f as the background separation processing means, the binarization processing unit 4c, the trolley wire worn section edge detecting unit 4d, and the trolley wire worn section width calculating unit 4e.

The standard deviation background removal processing unit 4f performs standard deviation background removal processing on the inputted line sensor image. An image (hereinafter referred to as a background removed image) created by the standard deviation background removal processing unit 4f is inputted into the binarization processing unit 4c via the memory M2.

The binarization processing unit 4c performs the binarization processing on the inputted background removed image, thereby creating the binarized image. The created binarized image is inputted into the trolley wire worn section edge detecting unit 4d via the memory M2.

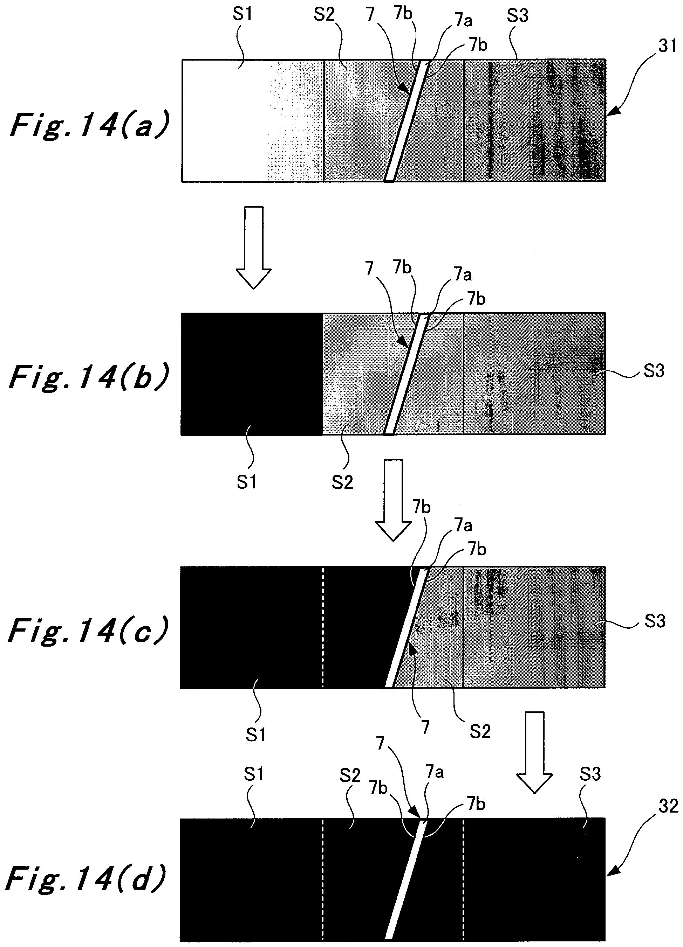

The processing by the standard deviation background removal processing unit 4f will be described below in detail by using Fig. 14. As shown in Fig. 14 (a), the standard deviation background removal processing unit 4f in the trolley wire wear measuring apparatus using image processing of this embodiment divides a line sensor image 31 into arbitrary segments (a first segment S1, a second segment S2, and a third segment S3 in this embodiment), and performs the standard deviation background removal processing on each of the segments.

First of all, the standard deviation background removal processing is performed on the first segment S1. In the example shown in Fig. 14(a), the first segment S1 does not capture the trolley wire 7 as a target object and its standard deviation value is therefore low. As a consequence, the entire first segment S1 is determined as a background. The first segment S1 thus determined as the background is blackened as a blackened segment so as not to affect the subsequent processing (Fig. 14(b)).

Then, the standard deviation background removal processing is performed on the second segment S2. In the example shown in Fig. 14(a), the second segment S2 captures the trolley wire 7 and its standard deviation value is therefore high. As a consequence, the second segment S2 is determined to capture a certain structure (which is the trolley wire 7 in this case; hereinafter referred to as a captured object). In the case of the determination that the captured object is captured as described above, a judgment is made as to whether or not its neighboring segment (the first segment S1 in this case) for which the standard deviation background removal processing has been completed is the blackened segment. When the neighboring segment is the blackened segment, a region adjacent to the captured object is determined as a background portion and is subjected to blackening processing (Fig. 14(c)). On the other hand, the blackening processing is not performed when the neighboring segment (the first segment S1 in this case) for which the standard deviation background removal processing has been completed is not the blackened segment.

Next, the standard deviation background removal processing is performed on the third segment S3. In the example shown in Fig. 14(a), the third segment S3 does not capture the trolley wire 7 and its standard deviation value is therefore low. As a consequence, the entire third segment S3 is determined as a background and is blackened as a blackened segment, like the first segment S1. Furthermore, concerning the segment being other than the first segment S1 and determined as the background, a judgment is made as to whether or not its neighboring segment (the second segment S2 in this case) for which the standard deviation background removal processing has been completed is the blackened segment. When the neighboring segment is not the blackened segment, a region between the captured object in the neighboring segment and the third segment S3 is regarded as a background portion and is subjected to blackening processing (Fig. 14(d)). On the other hand, only the third segment S3 is subjected to the blackening processing when the neighboring segment (the second segment S2 in this case) for which the standard deviation background removal processing has been completed is the blackened segment.

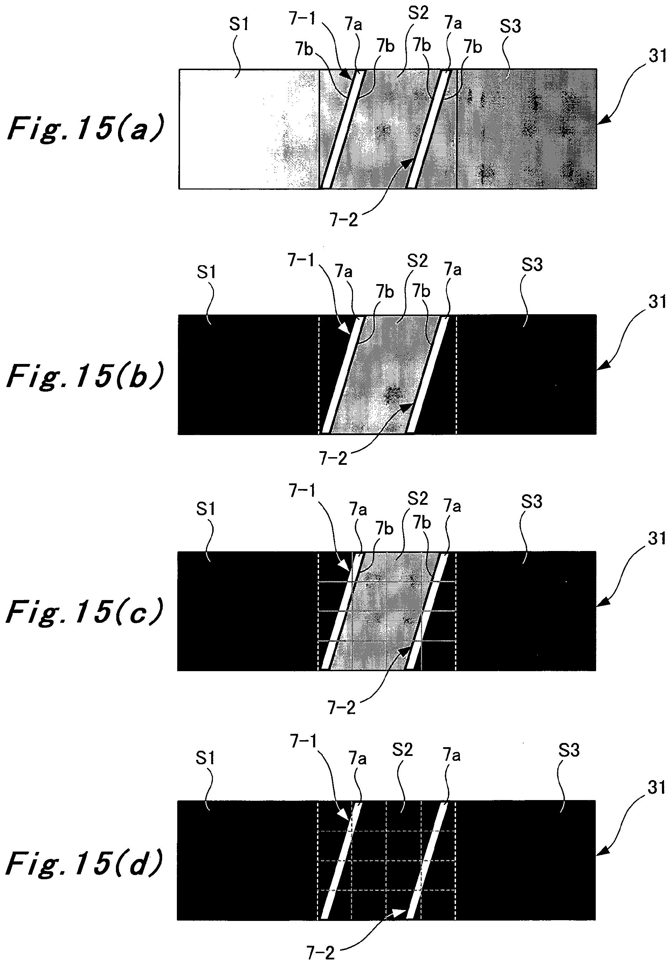

Here, there may be a case in which, for example when two trolley wires 7-1, 7-2 has been shot as shown in Fig. 15(a), two or more captured objects exist in the line sensor image 31 in a way that: the captured objects exist in the respective neighboring segments; or the two captured segments exist in one segment. In such a case, a region between the two trolley wires 7-1, 7-2 is unlikely to be blackened as shown in Fig. 15 (b) as a result of performing the above-described processing. In this case, the region which has not been blackened is subdivided into subdivided segments as shown in Fig. 15(c), and the subdivided segments are subjected to the similar processing. Thus, the captured objects and the background are separated from one another as shown in Fig. 15(d) by performing the blackening processing on the background between the two captured objects.

If a distance between the two or more captured objects is predictable in advance when the captured objects are shot in the line sensor image 31, then it is preferable to set the size of the segments at the time of dividing the line sensor image into the arbitrary segments in such a way that two or more captured objects do not exist in any one segment or in neighboring segments. In this way, it is possible to separate the captured objects and the background from one another by performing the processing just once. Specifically, the line sensor image may be divided into segments in such a manner as to satisfy the following formula (1):

$$B < L/2 \qquad (1),$$

where the size of division of the segments is B and the minimum distance between the captured objects is L.

The above-described processing makes it possible to obtain a background removed image 32 from which the brightness patch on the background is removed.

The binarizing process unit 4c performs the binarization processing on the inputted background removed image 32, thereby creating the binarized image. The created binarized image is inputted into the trolley wire worn section edge detecting unit 4d via the memory M2.

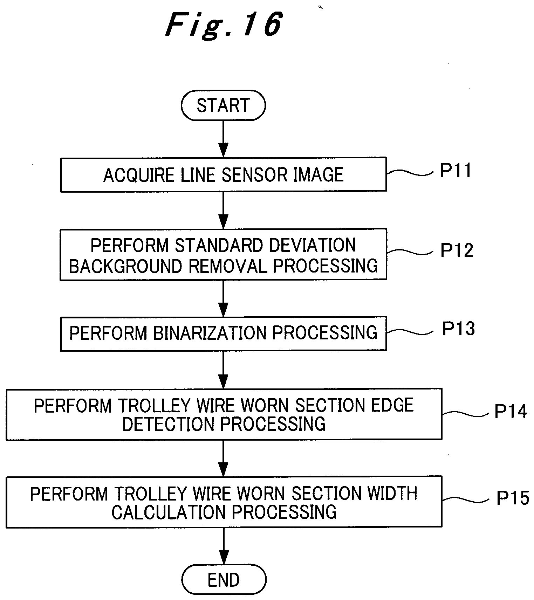

A flow of image processing by the measurement computer 4 of the trolley wire wear measuring apparatus using image processing of this embodiment will be described by using Fig. 16.

As shown in Fig. 16, the measurement computer 4 of this embodiment first causes the line sensor image creating unit 4a to perform the processing to create the line sensor image 31 by arranging image signals, which are inputted from the line sensor camera 2, in time series (step P11).

Subsequently, the standard deviation background removal processing unit 4f performs the above-described standard deviation background removal processing on the line sensor image 31 (step P12). Thereafter, the binarization processing unit 4c performs the binarization processing on the background removed image 32 obtained in step P12 (step P13). Thus, the binarized image is obtained.

Following step P13, the trolley wire worn section edge detecting unit 4d performs the processing to extract boundaries between the black representing the background of the binarized image and the white representing the trolley wire worn surface 7a therein, respectively as the left and right edge points (step P14). Thus, the edge data can be obtained.

Following step P14, the trolley wire worn section width calculating unit 4e performs the processing to calculate the distance between the left and right edge points as the width of the trolley wire worn surface 7a on the image, and then to convert this width into the actual amount of wear of the trolley wire 7 (step P15).

The measurement computer 4 of this embodiment can measure the amount of wear of the trolley wire 7 by performing the above-described processing.

In the line sensor image, the sky as the background is represents as a blurry monotonous space when the blue sky and clouds are captured. On the other hand, the trolley wire 7 as a measurement target is kept in focus and is therefore high in contrast. Using this fact, this embodiment is designed to divide the image into the arbitrary segments, to obtain the standard deviation in each segment, and to check the degree of variation in luminance therein. In this case, a segment having the large degree of variation in luminance is determined as a segment capturing the trolley wire, and a segment having the low degree of variation in luminance is determined as a background. Then, the segment determined as the background is subjected to the blackening processing so as not to affect the subsequent processing. The clarification of the segment as being the background reduces erroneous detection of the trolley wire.

In addition, when a segment not blackened has a neighboring segment which has been subjected to the blackening processing, the blackening processing is also performed in a region between the neighboring segment and a captured object in the segment. In this way, it is possible to fill a blank region (pixels representing the background but not being blackened) defined between the blackened segment and the captured object in the region not blackened, and thereby to further reduce erroneous detection. In this embodiment, pixels each having a luminance difference equal to or above a certain value as compared to an average luminance value of the blackened segment are detected as a position of the captured object.

According to the trolley wire wear measuring apparatus using image processing of the above-described embodiment, the trolley wire worn surface 7a and the background can be separated from each other even when there is a brightness patch on the background. Thus, erroneous detection of the trolley wire worn surface 7a can be reduced.

In addition, even in the segment that is not blackened, the trolley wire worn surface and the background can be reliably separated from each other, since the portion up to the captured object in the segment is blackened if its neighboring segment is the blackened segment.

This embodiment has described the example in which the standard deviation background removal processing unit 4f blackens the region regarded as the background. However, the invention is not limited only to the configuration to blacken the region regarded as the background. Needless to say, various changes are possible without departing from the gist of the invention. For instance, the region regarded as the background can be stored as mask pixels in a memory space, and such mask pixels can be defined as pixels on which no subsequent processing is performed.

THIRD EMBODIMENT

(Daytime Wear Measurement)

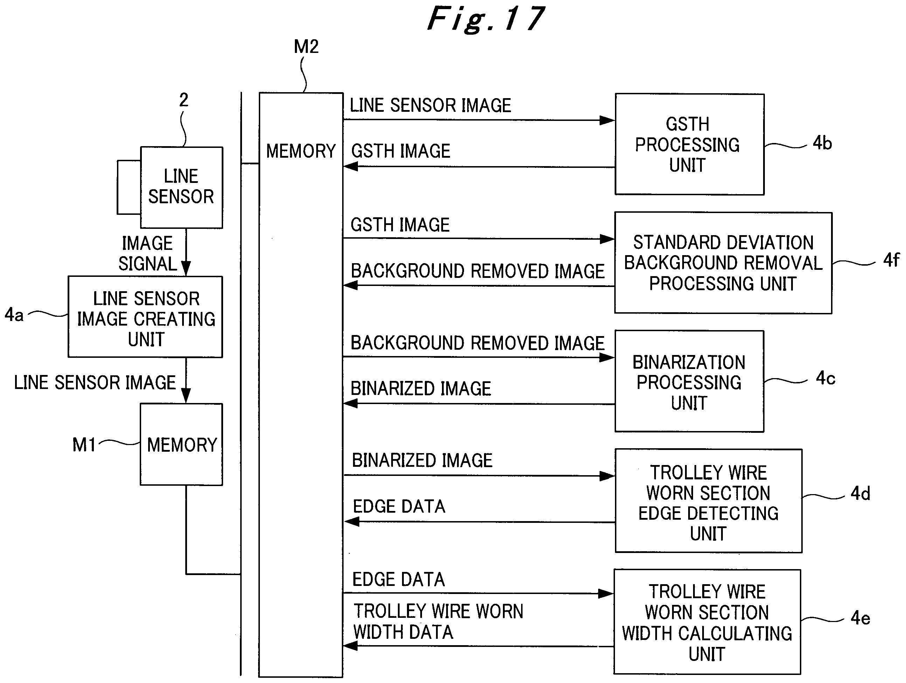

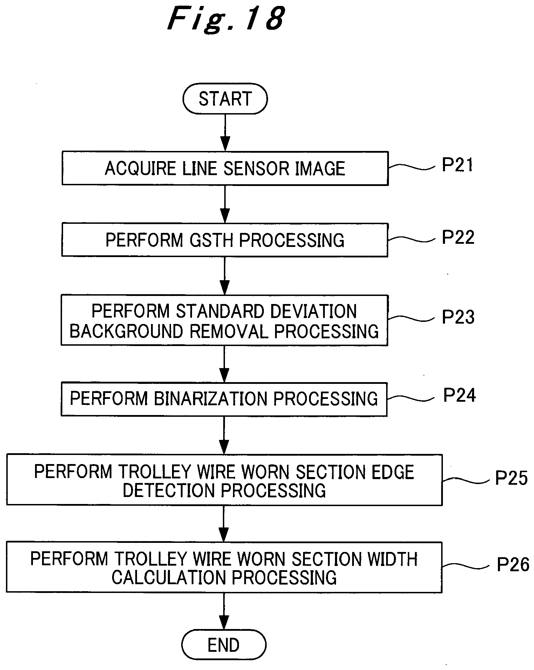

A third embodiment of the trolley wire wear measuring apparatus using image processing according to the present invention will be described by using Fig. 17 and Fig. 18. This embodiment is an example in which the standard deviation background removal processing unit 4f of the above-described second embodiment shown in Fig. 13 is added to the measurement computer 4 of the above-described first embodiment shown in Fig. 2. The rest of the configuration is substantially the same as the configuration of the above-described first embodiment. In the following, similar components will be denoted by the same reference numerals and overlapped descriptions will be omitted. Instead, different features will mainly be described below.

As shown in Fig. 17, in this embodiment, the measurement computer 4 includes the line sensor image creating unit 4a, the GSTH processing unit 4b, the standard deviation background removal processing unit 4f, the binarization processing unit 4c, the trolley wire worn section edge detecting unit 4d, and the trolley wire worn section width calculating unit 4e.

In this embodiment, the GSTH processing unit 4b performs the GSTH processing on the inputted line sensor image. The GSTH image thus created is inputted into the standard deviation background removal processing unit 4f via the memory M2.

The standard deviation background removal processing unit 4f performs the standard deviation background removal processing on the inputted GSTH image. The background removed image thus created is inputted into the binarization processing unit 4c via the memory M2.

The binarization processing unit 4c performs the binarization processing on the inputted background removed image, thereby creating the binarized image. The created binarized image is inputted into the trolley wire worn section edge detecting unit 4d via the memory M2.

A flow of image processing by the measurement computer 4 of the trolley wire wear measuring apparatus using image processing of this embodiment will be described by using Fig. 18.

As shown in Fig. 18, the measurement computer 4 of this embodiment first causes the line sensor image creating unit 4a to perform the processing to create the line sensor image 31 by arranging image signals, which are inputted from the line sensor camera 2, in time series (step P21).

Subsequently, the GSTH process unit 4b performs the GSTH processing on the line sensor image (step P22). Thus, the GSTH image is obtained. Thereafter, the standard deviation background removal processing unit 4f performs the standard deviation background removal processing on the GSTH image (step P23). Thus, the background removed image is obtained.

Then, the binarization processing unit 4c performs the binarization processing on the background removed image obtained in step P23 (step P24). Thus, the binarized image is obtained.

Following step P24, the trolley wire worn section edge detecting unit 4d performs the processing to extract the boundaries between the black representing the background of the binarized image and the white representing the trolley wire worn surface 7a therein, respectively as the left and right edge points (step P25). Thus, the edge data can be obtained.

Following step P25, the trolley wire worn section width calculating unit 4e performs the processing to calculate the distance between the left and right edge points as the width of the trolley wire worn surface 7a on the image, and then to convert this width into the actual amount of wear of the trolley wire 7 (step P26).

The measurement computer 4 of this embodiment can measure the amount of wear of the trolley wire 7 by performing the above-described processing.

The trolley wire wear measuring apparatus using image processing of this embodiment can further improve accuracy in comparison with the first embodiment or the second embodiment since the apparatus can remove both a captured object other than the trolley wire and a brightness patch.

In addition, the apparatus can perform the trolley wire wear measurement with higher accuracy by: firstly removing the captured object other than the trolley wire 7 by performing the GSTH processing; and then performing the standard deviation background removal processing.

Note that this embodiment may also be designed to allow an operator to select the necessities of the GSTH processing and of the standard deviation background removal processing depending on a shooting environment and a shooting condition (by setting ON/OFF of the processing in a setting file, for example).

INDUSTRIAL APPLICABILITY

The present invention is suitable for application to a trolley wire wear measuring apparatus using image processing.

EXPLANATION OF REFERENCE NUMERALS

| 1 | VEHICLE |
|---|---|
| 2 | LINE SENSOR CAMERA |
| 3 | LIGHTING DEVICE |
| 4 | MEASUREMENT COMPUTER |
| 4a | LINE SENSOR IMAGE CREATING UNIT |
| 4b | GSTH PROCESSING UNIT |
| 4c | BINARIZATION PROCESSING UNIT |
| 4d | TROLLEY WIRE WORN SECTION EDGE DETECTING UNIT |
| 4e | TROLLEY WIRE WORN SECTION WIDTH CALCULATING UNIT |
| 5 | RECORDING DEVICE |
| 7 | TROLLEY WIRE |
| 7a | TROLLEY WIRE WORN SECTION |
| 7b | TROLLEY WIRE SIDE SURFACE |
| 8 | PANTOGRAPH |
| 10L, 10R | EDGE POINT |
| 21, 31 | LINE SENSOR IMAGE |
| 22 | ERODED IMAGE |
| 23 | OPENING IMAGE |
| 24 | GSTH IMAGE |
| 25 | BINARIZED IMAGE |
| 32 | BACKGROUND REMOVED IMAGE |
| M1, M2 | MEMORY |
| S1 | FIRST SEGMENT |
| S2 | SECOND SEGMENT |
| S3 | THIRD SEGMENT |

**Claims**

1. A trolley wire wear measuring apparatus using image processing including
   a line sensor camera (2) installed on a roof of a vehicle (1) with its scan line direction set horizontal and perpendicular to a traveling direction of the vehicle (1) and configured to shoot a trolley wire (7),
   illuminating means (3) also installed on the roof of the vehicle (1) and configured to illuminate the trolley wire (7), and
   image processing means (4) installed inside the vehicle (1), where the image processing means (4) comprises:

   line sensor image creating means (4a) configured to create a line sensor image (21) in which image signals inputted from the line sensor camera (2) are arranged in time series;

   background separation processing means configured to separate an inputted image into the trolley wire (7) and a background;
   binarization processing means (4c) configured to perform binarization processing on an inputted image and create a binarized image (25);
   trolley wire worn section edge detecting means (4d) configured to detect edges (10L, 10R) on two sides of a worn section (7a) of the trolley wire (7) from an inputted image; and
   trolley wire worn section width calculating means (4e) configured to detect an amount of wear of the trolley wire (7) using positions of the edges (10L, 10R) on the two sides of the worn section (7a), **characterized in that**
   the background separation processing means is GSTH processing means (4b) configured to perform GSTH processing on the inputted image to create a GSTH image (24) in which the worn section (7a) of the trolley wire (7) in the inputted image is emphasized.

2. The apparatus according to claim 1, **characterized in that**
   the GSTH processing means (4b) performs the GSTH processing on the line sensor image (21) to create the GSTH image (24) in which the worn section (7a) of the trolley wire (7) in the line sensor image (21) is emphasized,
   the binarization processing means (4c) performs the binarization processing on the GSTH image (24) to create the binarized image (25), and
   the trolley wire worn section edge detecting means (4d) detects the edges (10L, 10R) from the binarized image (25).

3. A trolley wire wear measuring apparatus using image processing including
   a line sensor camera (2) installed on a roof of a vehicle (1) with its scan line direction set horizontal and perpendicular to a traveling direction of the vehicle (1) and configured to shoot a trolley wire (7),
   illuminating means (3) also installed on the roof of the vehicle (1) and configured to illuminate the trolley wire (7), and
   image processing means (4) installed inside the vehicle (1), where the image processing means (4) comprises:

   line sensor image creating means (4a) configured to create a line sensor image (21) in which image signals inputted from the line sensor camera (2) are arranged in time series;
   background separation processing means configured to separate an inputted image into the trolley wire (7) and a background;
   binarization processing means (4c) configured to perform binarization processing on an inputted image and create a binarized image (25);
trolley wire worn section edge detecting means (4d) configured to detect edges (10L, 10R) on two sides of a worn section (7a) of the trolley wire (7) from an inputted image; and
trolley wire worn section width calculating means (4e) configured to detect an amount of wear of the trolley wire (7) using positions of the edges (10L, 10R) on the two sides of the worn section (7a), **characterized in that**
the background separation processing means is standard deviation background removal processing means (4f) configured to divide the inputted image into arbitrary segments (S1-S3) and perform standard deviation background removal processing on each segment, thereby creating a background removed image (32), the standard deviation background removal processing including: for each segment,
judging whether or not a target object is captured in the segment,
when the target object is captured in the segment and the target object is not captured in its neighboring segment, regarding a region between the neighboring segment and the target object as the background, and
when the target object is not captured in the segment and the target object is captured in its neighboring segment, regarding the segment and a region between the target object in the neighboring segment and the segment as the background.

4. The apparatus according to claim 3, **characterized in that**
when a region not regarded as the background exists in one of the segments (S1-S3) subjected to the standard deviation background removal processing, the standard deviation background removal processing means (4f) subdivides the segment into subdivided segments, and performs the standard deviation background removal processing on each subdivided segment, thereby creating the background removed image (32), the standard deviation background removal processing including, for each subdivided segment,
judging whether or not the target object is captured in the segment,
when the target object is captured in the segment and the target object is not captured in its neighboring segment, regarding a region between the neighboring segment and the target object as the background, and
when the target object is not captured in the segment and the target object is captured in its neighboring segment, regarding the segment and a region between the target object in the neighboring segment and the segment as the background.

5. The apparatus according to claim 3, **characterized in that** each arbitrary segment (S1-S3) has a size that does not allow the target object to exist across a boundary between continuous segments.

6. The apparatus according to any one of claims 3 to 5, **characterized in that**
the standard deviation background removal processing means (4f) performs the standard deviation background removal processing on the line sensor image (21) to create the background removed image (32) which includes the trolley wire (7) extracted from the line sensor image (21),
the binarization processing means (4c) performs the binarization processing on the background removed image (32) to create the binarized image (25), and
the trolley wire worn section edge detecting means (4d) detects the edges (10L, 10R) from the binarized image (25).

7. The apparatus according to claim 1 or 2, **characterized in that**
the image processing means (4) further comprises standard deviation background removal processing means (4f), as the background separation processing means, configured to divide the inputted image into arbitrary segments (S1-S3) and perform standard deviation background removal processing on each of the segments (S1-S3), thereby creating a background removed image (32), the standard deviation background removal processing including, for each of the segments (S1-S3),
judging whether or not a target object is captured in the segment,
when the target object is captured in the segment and the target object is not captured in its neighboring segment, regarding a region between the neighboring segment and the target object as the background, and
when the target object is not captured in the segment and the target object is captured in its neighboring segment, regarding the segment and a region between the target object in the neighboring segment and the segment as the background.

8. The apparatus according to claim 7, **characterized in that**
when a region not regarded as the background exists in one of the segments (S1-S3) subjected to the standard deviation background removal processing, the standard deviation background removal processing means (4f) subdivides the segment into subdivided segments and performs the standard deviation background removal processing on each of the subdivided segments, thereby creating the background removed image (32), the standard deviation background removal processing including, for each of the subdivided segment,

judging whether or not the target object is captured in the segment,

when the target object is captured in the segment and the target object is not captured in its neighboring segment, regarding a region between the neighboring segment and the target object as the background, and

when the target object is not captured in the segment and the target object is captured in its neighboring segment, regarding the segment and a region between the target object in the neighboring segment and the segment as the background.

9. The apparatus according to claim 7, **characterized in that** each arbitrary segment (S1-S3) has such a size that does not allow the target object to exist across a boundary between the continuous segments.

10. The apparatus according to claim 7, **characterized in that**

the GSTH processing means (4b) performs the GSTH processing on the line sensor image (21) to create the GSTH image (24) in which the worn section (7a) of the trolley wire (7) in the line sensor image (21) is emphasized,

the standard deviation background removal processing means (4f) performs the standard deviation background removal processing on the GSTH image (24) to create the background removed image (32) which includes the trolley wire (7) extracted from in the GSTH image (24),

the binarization processing means (4c) performs the binarization processing on the background removed image (32) to create the binarized image (25), and

the trolley wire worn section edge detecting means (4d) detects the edges (10L, 10R) from the binarized image (25).

**Patentansprüche**

1. Gerät zum Messen des Abriebs an einer Oberleitung unter Verwendung von Bildverarbeitung, mit

einer Zeilensensorkamera (2), die auf einem Dach eines Fahrzeugs (1) so installiert ist, dass ihre Abtastzeilenrichtung horizontal und senkrecht zu einer Fortbewegungsrichtung des Fahrzeugs (1) eingestellt ist, und die dazu konfiguriert ist, eine Oberleitung (7) aufzunehmen,

einer Beleuchtungseinrichtung (3), die auch auf dem Dach des Fahrzeugs (1) installiert ist und die dazu konfiguriert ist, die Oberleitung (7) zu beleuchten, und

einer Bildverarbeitungseinrichtung (4), die innerhalb des Fahrzeugs (1) installiert ist,

wobei die Bildverarbeitungseinrichtung (4) aufweist:

eine Zeilensensorbild-Erzeugungseinrichtung (4a), die dazu konfiguriert ist, ein Zeilensensorbild (21) zu erzeugen, in dem aus der Zeilensensorkamera (2) eingegebene Bildsignale in zeitlicher Abfolge angeordnet sind,

eine Hintergrundtrennverarbeitungseinrichtung, die dazu konfiguriert ist, ein eingegebenes Bild in die Oberleitung (7) und einen Hintergrund zu trennen,

eine Binärisierungsverarbeitungseinrichtung (4c), die dazu konfiguriert ist, eine Binärisierungsverarbeitung an einem eingegebenen Bild durchzuführen und ein binärisiertes Bild (25) zu erzeugen,

eine Oberleitungsabriebabschnitt-Kantenerfassungseinrichtung (4d), die dazu konfiguriert ist, Kanten (10L, 10R) auf zwei Seiten eines Abriebabschnitts (7a) der Oberleitung (7) aus einem eingegebenen Bild zu erfassen, und

eine Oberleitungsabriebabschnitt-Breitenberechnungseinrichtung (4e), die dazu konfiguriert ist, ein Abriebausmaß der Oberleitung (7) unter Verwendung von Positionen der Kanten (10L, 10R) auf den zwei Seiten des Abriebabschnitts (7a) zu erfassen,

**dadurch gekennzeichnet, dass** die Hintergrundtrennverarbeitungseinrichtung eine GSTH-Verarbeitungseinrichtung (4b) ist, die dazu konfiguriert ist, eine GSTH-Verarbeitung an dem eingegebenen Bild durchzuführen, um ein GSTH-Bild (24) zu erzeugen, in dem der Abriebabschnitt (7a) der Oberleitung (7) in dem eingegebenen Bild hervorgehoben ist.

2. Gerät nach Anspruch 1, **dadurch gekennzeichnet, dass**

die GSTH-Verarbeitungseinrichtung (4b) die GSTH-Verarbeitung an dem Zeilensensorbild (21) durchführt, um das GSTH-Bild (24) zu erzeugen, in dem der Abriebabschnitt (7a) der Oberleitung (7) in dem Zeilensensorbild (21) hervorgehoben ist,

die Binärisierungsverarbeitungseinrichtung (4c) die Binärisierungsverarbeitung an dem GSTH-Bild (24) durchführt, um das binärisierte Bild (25) zu erzeugen, und

die Oberleitungsabriebabschnitt-Kantenerfassungseinrichtung (4d) die Kanten (10L, 10R) aus dem binärisierten Bild (25) erfasst.

3. Gerät zum Messen des Abriebs einer Oberleitung unter Verwendung von Bildverarbeitung, mit

einer Zeilensensorkamera (2), die auf einem Dach eines Fahrzeugs (1) so installiert ist, dass ihre Abtastzeilenrichtung horizontal und senkrecht zu einer Fortbewegungsrichtung des Fahrzeugs (1) eingestellt ist, und die dazu konfiguriert ist, eine Oberleitung (7) aufzunehmen,

einer Beleuchtungseinrichtung (3), die auch auf dem Dach des Fahrzeugs (1) installiert ist und die dazu konfiguriert ist, die Oberleitung (7) zu beleuchten, und

einer Bildverarbeitungseinrichtung (4), die innerhalb des Fahrzeugs (1) installiert ist,

wobei die Bildverarbeitungseinrichtung (4) aufweist:

eine Zeilensensorbild-Erzeugungseinrichtung (4a), die dazu konfiguriert ist, ein Zeilensensorbild (21) zu erzeugen, in dem aus der Zeilensensorkamera (2) eingegebene Bildsignale in zeitlicher Abfolge angeordnet sind,

eine Hintergrundtrennverarbeitungseinrichtung, die dazu konfiguriert ist, ein eingegebenes Bild in die Oberleitung (7) und einen Hintergrund zu trennen,

eine Binärisierungsverarbeitungseinrichtung (4c), die dazu konfiguriert ist, eine Binärisierungsverarbeitung an einem eingegebenen Bild durchzuführen und ein binärisiertes Bild (25) zu erzeugen,

eine Oberleitungsabriebabschnitt-Kantenerfassungseinrichtung (4d), die dazu konfiguriert ist, Kanten (10L, 10R) auf zwei Seiten eines Abriebabschnitts (7a) der Oberleitung (7) aus einem eingegebenen Bild zu erfassen, und

eine Oberleitungsabriebabschnitt-Breitenberechnungseinrichtung (4e), die dazu konfiguriert ist, ein Abriebausmaß der Oberleitung (7) unter Verwendung von Positionen der Kanten (10L, 10R) auf den zwei Seiten des Abriebabschnitts (7a) zu erfassen,

**dadurch gekennzeichnet, dass**

die Hintergrundtrennverarbeitungseinrichtung eine Standardabweichungs-Hintergrundentfernungs-Verarbeitungseinrichtung (4f) ist, die dazu konfiguriert ist, das eingegebene Bild in beliebige Segmente (S1-S3) zu unterteilen und eine Standardabweichungs-Hintergrundentfernungsverarbeitung an jedem Segment durchzuführen, um dadurch ein hintergrundfreies Bild (32) zu erzeugen, wobei in der Standardabweichungs-Hintergrundentfernungsverarbeitung für jedes Segment:

beurteilt wird, ob ein Zielobjekt in dem Segment aufgezeichnet ist,

wenn das Zielobjekt in dem Segment aufgezeichnet ist und das Zielobjekt nicht in dessen Nachbarsegment aufgezeichnet ist, eine Region zwischen dem Nachbarsegment und dem Zielobjekt als der Hintergrund betrachtet wird, und

wenn das Zielobjekt nicht in dem Segment aufgezeichnet ist und das Zielobjekt in dessen Nachbarsegment aufgezeichnet ist, das Segment und eine Region zwischen dem Zielobjekt in dem Nachbarsegment und dem Segment als der Hintergrund betrachtet wird.

4. Gerät nach Anspruch 3, **dadurch gekennzeichnet, dass**

wenn eine nicht als der Hintergrund betrachtete Region in einem der Segmente (S1-S3) existiert, die der Standardabweichungs-Hintergrundentfernungsverarbeitung unterzogen werden, die Standardabweichungs-Hintergrundentfernungs-Verarbeitungseinrichtung (4f) das Segment in Untersegmente unterteilt und die Standardabweichungs-Hintergrundentfernungsverarbeitung an jedem Untersegment durchführt, um dadurch das hintergrundfreie Bild (32) zu erzeugen, wobei in der Standardabweichungs-Hintergrundentfernungsverarbeitung für jedes Untersegment:

beurteilt wird, ob das Zielobjekt in dem Segment aufgezeichnet ist,

wenn das Zielobjekt in dem Segment aufgezeichnet ist und das Zielobjekt nicht in dessen Nachbarsegment aufgezeichnet ist, eine Region zwischen dem Nachbarsegment und dem Zielobjekt als der Hintergrund betrachtet wird, und

wenn das Zielobjekt nicht in dem Segment aufgezeichnet ist und das Zielobjekt in dessen Nachbarsegment aufgezeichnet ist, das Segment und eine Region zwischen dem Zielobjekt in dem Nachbarsegment und dem Segment als der Hintergrund betrachtet wird.

5. Gerät nach Anspruch 3, **dadurch gekennzeichnet, dass** jedes beliebige Segment (S1-S3) eine Größe aufweist, die es dem Zielobjekt nicht gestattet, sich über eine Grenze zwischen angrenzenden Segmenten zu erstrecken.

6. Gerät nach einem der Ansprüche 3 bis 5, **dadurch gekennzeichnet, dass**

die Standardabweichungs-Hintergrundentfernungs-Verarbeitungseinrichtung (4f) die Standardabweichungs-Hintergrundentfernungsverarbeitung an dem Zeilensensorbild (21) durchführt, um das hintergrundfreie Bild (32) zu erzeugen, das die aus dem Zeilensensorbild (21) extrahierte Oberleitung (7) enthält,

die Binärisierungsverarbeitungseinrichtung (4c) die Binärisierungsverarbeitung an dem hintergrundfreien Bild (32) durchführt, um das binärisierte Bild (25) zu erzeugen, und

die Oberleitungsabriebabschnitt-Kantenerfassungseinrichtung (4d) die Kanten (10L, 10R) aus dem binärisierten Bild (25) erfasst.

7. Gerät nach Anspruch 1 oder 2, **dadurch gekennzeichnet, dass**

die Bildverarbeitungseinrichtung (4) ferner eine Standardabweichungs-Hintergrundentfernungs-Verarbeitungseinrichtung (4f) als die Hintergrundtrennverarbeitungseinrichtung umfasst, die dazu konfiguriert ist, das eingegebene Bild in beliebige Segmente (S1-S3) zu unterteilen und eine Standardabweichungs-Hintergrundentfernungsverarbeitung an jedem der Segmente (S1-S3) durchzuführen, um dadurch ein hintergrundfreies Bild (32) zu erzeugen, wobei in der Standardabweichungs-Hintergrund-fernungsverarbeitung für jedes Segment (S1-S3):

beurteilt wird, ob ein Zielobjekt in dem Segment aufgezeichnet ist,

wenn das Zielobjekt in dem Segment aufgezeichnet ist und das Zielobjekt nicht in dessen Nachbarsegment aufgezeichnet ist, eine Region zwischen dem Nachbarsegment und dem Zielobjekt als der Hintergrund betrachtet wird, und

wenn das Zielobjekt nicht in dem Segment aufgezeichnet ist und das Zielobjekt in dessen Nachbarsegment aufgezeichnet ist, das Segment und eine Region zwischen dem Zielobjekt in dem Nachbarsegment und dem Segment als der Hintergrund betrachtet wird.

8. Gerät nach Anspruch 7, **dadurch gekennzeichnet, dass**

wenn eine nicht als der Hintergrund betrachtete Region in einem der Segmente (S1-S3) existiert, die der Standardabweichungs-Hintergrundentfer-nungsverarbeitung unterzogen werden, die Stan-dardabweichungs-Hintergrundentfernungs-Verar-beitungseinrichtung (4f) das Segment in Untersegmente unterteilt und die Standardabweichungs-Hin-tergrundentfernungsverarbeitung an jedem Unter-segment durchführt, um dadurch das hintergrundfreie Bild (32) zu erzeugen, wobei in der Standardabweichungs-Hintergrundentfernungsverarbeitung für jedes Untersegment:

beurteilt wird, ob das Zielobjekt in dem Segment aufgezeichnet ist,

wenn das Zielobjekt in dem Segment aufgezeichnet ist und das Zielobjekt nicht in dessen Nachbarsegment aufgezeichnet ist, eine Region zwischen dem Nachbarsegment und dem Zielobjekt als der Hintergrund betrachtet wird, und

wenn das Zielobjekt nicht in dem Segment aufgezeichnet ist und das Zielobjekt in dessen Nachbarsegment aufgezeichnet ist, das Segment und eine Region zwischen dem Zielobjekt in dem Nachbarsegment und dem Segment als der Hintergrund betrachtet wird.

9. Gerät nach Anspruch 7, **dadurch gekennzeichnet,**

**dass** jedes beliebige Segment (S1-S3) eine Größe aufweist, die es dem Zielobjekt nicht gestattet, sich über eine Grenze zwischen angrenzenden Segmenten zu erstrecken.

10. Gerät nach Anspruch 7, **dadurch gekennzeichnet, dass**

die GSTH-Verarbeitungseinrichtung (4b) die GSTH-Verarbeitung an dem Zeilensensorbild (21) durchführt, um das GSTH-Bild (24) zu erzeugen, in dem der Abriebabschnitt (7a) der Oberleitung (7) in dem Zeilensensorbild (21) hervorgehoben ist,

die Standardabweichungs-Hintergrundentfernungs-Verarbeitungseinrichtung (4f) die Standardabweichungs-Hintergrundentfernungsverarbeitung an dem GSTH-Bild (24) durchführt, um das hintergrundfreie Bild (32) zu erzeugen, das die aus dem GSTH-Bild (24) extrahierte Oberleitung (7) enthält,

die Binärisierungsverarbeitungseinrichtung (4c) die Binärisierungsverarbeitung an dem hintergrundfreien Bild (32) durchführt, um das binärisierte Bild (25) zu erzeugen, und

die Oberleitungsabriebabschnitt-Kantenerfassungseinrichtung (4d) die Kanten (10L, 10R) aus dem binärisierten Bild (25) erfasst.

**Revendications**

1. Appareil de mesure d'usure d'un fil de contact utilisant un traitement d'image incluant :

un appareil de prise de vues de capteur de ligne (2) installé sur un toit d'un véhicule (1) avec sa direction de ligne de balayage réglée horizontale et perpendiculaire à une direction de déplacement du véhicule (1) et configurée pour prendre des images d'un fil de contact(7),

des moyens d'éclairage (3) également installés sur le toit du véhicule (1) et configurés pour éclairer le fil de contact (7), et

des moyens de traitement d'image (4) installés à l'intérieur du véhicule (1),

dans lequel les moyens de traitement d'image (4) comportent :

des moyens de création d'image de capteur de ligne (4a) configurés pour créer une image de capteur de ligne (21) dans laquelle des signaux d'image entrés à partir de l'appareil de prise de vues de capteur de ligne (2) sont disposés chronologiquement,

des moyens de traitement de séparation d'arrière-plan configurés pour séparer une image entrée en le fil de contact (7) et un arrière-plan,

des moyens de traitement de binarisation (4c) configurés pour exécuter un traitement de binarisation sur une image entrée et créer une image binarisée (25),

des moyens de détection de bords de section usée de fil de contact (4d) configurés pour détecter des bords (10L, 10R) des deux côtés d'une section usée (7a) du fil de contact (7) à partir d'une image entrée, et

des moyens de calcul de largeur de section usée de fil de contact (4e) configurés pour détecter une quantité d'usure du fil de contact (7) en utilisant des positions des bords (10L, 10R) des deux côtés de la section usée (7a), **caractérisé en ce que**

les moyens de traitement de séparation d'arrière-plan sont des moyens de traitement GSTH (acronyme anglais pour « gray scale-top hat ») (4b) configurés pour exécuter un traitement GSTH sur l'image entrée pour créer une image GSTH (24) dans laquelle la section usée (7a) du fil de contact (7) dans l'image entrée est mise en valeur.

**2.** Appareil selon la revendication 1, **caractérisé en ce que**

les moyens de traitement GSTH (4b) exécutent le traitement GSTH sur l'image de capteur de ligne (21) pour créer l'image GSTH (24) dans laquelle la section usée (7a) du fil de contact (7) dans l'image de capteur de ligne (21) est mise en valeur,

les moyens de traitement de binarisation (4c) exécutent le traitement de binarisation sur l'image GSTH (24) pour créer l'image binarisée (25), et

les moyens de détection de bords de section usée de fil de contact (4d) détectent les bords (10L, 10R) à partir de l'image binarisée (25).

**3.** Appareil de mesure d'usure de fil de contact utilisant un traitement d'image incluant

un appareil de prise de vues de capteur de ligne (2) installé sur un toit de véhicule (1) avec sa direction de ligne de balayage réglée horizontale et perpendiculaire à une direction de déplacement du véhicule (1) et configurée pour prendre des images d'un fil de contact (7),

des moyens d'éclairage (3) également installés sur le toit du véhicule (1) et configurés pour éclairer le fil de contact (7), et

des moyens de traitement d'image (4) installés à l'intérieur du véhicule (1),

dans lequel les moyens de traitement d'image (4) comportent :

des moyens de création d'image de capteur de ligne (4a) configurés pour créer une image de capteur de ligne (21) dans laquelle des signaux d'image entrés à partir de l'appareil de prise de vues de capteur de ligne (2) sont disposés chronologiquement,

des moyens de traitement de séparation d'arrière-plan configurés pour séparer une image entrée en le fil de contact (7) et un arrière-plan,

des moyens de traitement de binarisation (4c) configurés pour exécuter un traitement de binarisation sur une image entrée et créer une image binarisée (25),

des moyens de détection de bords de section usée de fil de contact (4d) configurés pour détecter des bords (10L, 10R) des deux côtés d'une section usée (7a) du fil de contact (7) à partir d'une image entrée, et

des moyens de calcul de largeur de section usée de fil de contact (4e) configurés pour détecter une quantité d'usure du fil de contact (7) en utilisant des positions des bords (10L, 10R) des deux côtés de la section usée (7a), **caractérisé en ce que**

les moyens de traitement de séparation d'arrière-plan sont des moyens de traitement de suppression d'arrière-plan à base d'écart-type (4f) configurés pour diviser l'image entrée en segments arbitraires (S1 à S3) et exécuter un traitement de suppression d'arrière-plan à base d'écart-type sur chaque segment, en créant ainsi une image à arrière-plan supprimé (32), le traitement de suppression d'arrière-plan à base d'écart-type incluant pour chaque segment,

de juger si oui ou non un objet cible est capturé dans le segment,

lorsque l'objet cible est capturé dans le segment et que l'objet cible n'est pas capturé dans son segment voisin, considérer une région entre le segment voisin et l'objet cible comme étant l'arrière-plan, et

lorsque l'objet cible n'est pas capturé dans le segment et que l'objet cible est capturé dans son segment voisin, considérer le segment et une région entre l'objet cible dans le segment voisin et le segment comme étant l'arrière-plan.

**4.** Appareil selon la revendication 3, **caractérisé en ce que**

lorsqu'une région non considérée comme étant l'arrière-plan existe dans l'un des segments (S1 à S3) soumis au traitement de suppression d'arrière-plan à base d'écart-type, les moyens de traitement de suppression d'arrière-plan à base d'écart-type (4f) subdivisent le segment en segments subdivisés, et exécutent le traitement de suppression d'arrière-plan à base d'écart-type sur chaque segment subdivisé, en créant ainsi l'image à arrière-plan supprimé (32), le traitement de suppression d'arrière-plan à base d'écart-type incluant, pour chaque segment subdivisé,

de juger si oui ou non l'objet cible est capturé dans le segment,

lorsque l'objet cible est capturé dans le segment et que l'objet cible n'est pas capturé dans son segment voisin, considérer une région entre le segment voisin et l'objet cible comme étant l'arrière-plan, et lorsque l'objet cible n'est pas capturé dans le segment et que l'objet cible est capturé dans son segment voisin, considérer le segment et une région entre l'objet cible dans le segment voisin et le segment comme étant l'arrière-plan.

5. Appareil selon la revendication 3, **caractérisé en ce que** chaque segment arbitraire (S1 à S3) a une taille qui ne permet pas à l'objet cible d'exister à travers une frontière entre des segments continus.

6. Appareil selon l'une quelconque des revendications 3 à 5, **caractérisé en ce que**
les moyens de traitement de suppression d'arrière-plan à base d'écart-type (4f) exécutent le traitement de suppression d'arrière-plan à base d'écart-type sur l'image de capteur de ligne (21) pour créer l'image à arrière-plan supprimé (32) qui inclut le fil de contact(7) extrait de l'image de capteur de ligne (21),
les moyens de traitement de binarisation (4c) exécutent le traitement de binarisation sur l'image à arrière-plan supprimé (32) pour créer l'image binarisée (25), et
les moyens de détection de bords de section usée de fil de contact (4d) détectent les bords (10L, 10R) à partir de l'image binarisée (25).

7. Appareil selon la revendication 1 ou 2, **caractérisé en ce que**
les moyens de traitement d'image (4) comportent en outre des moyens de traitement de suppression d'arrière-plan à base d'écart-type (4f), en tant que moyens de traitement de séparation d'arrière-plan, configurés pour diviser l'image entrée en segments arbitraires (S1 à S3) et exécuter un traitement de suppression d'arrière-plan à base d'écart-type sur chacun des segments (S1 à S3), en créant ainsi une image à arrière-plan supprimé (32), le traitement de suppression d'arrière-plan à base d'écart-type incluant, pour chacun des segments (S1 à S3),
de juger si oui ou non un objet cible est capturé dans le segment,
lorsque l'objet cible est capturé dans le segment et que l'objet cible n'est pas capturé dans son segment voisin, considérer une région entre le segment voisin et l'objet cible comme étant l'arrière-plan, et
lorsque l'objet cible n'est pas capturé dans le segment et que l'objet cible est capturé dans son segment voisin, considérer le segment et une région entre l'objet cible dans le segment voisin et le segment comme étant l'arrière-plan.

8. Appareil selon la revendication 7, **caractérisé en ce que**
lorsqu'une région non considérée comme étant l'arrière-plan existe dans l'un des segments (S1 à S3) soumis au traitement de suppression d'arrière-plan à base d'écart-type, les moyens de traitement de suppression d'arrière-plan à base d'écart-type (4f) subdivisent le segment en segments subdivisés et exécutent le traitement de suppression d'arrière-plan à base d'écart-type sur chacun des segments subdivisés, en créant ainsi l'image à arrière-plan supprimé (32), le traitement de suppression d'arrière-plan à base d'écart-type incluant, pour chacun des segments subdivisés,
de juger si oui ou non l'objet cible est capturé dans le segment,
lorsque l'objet cible est capturé dans le segment et que l'objet cible n'est pas capturé dans son segment voisin, considérer une région entre le segment voisin et l'objet cible comme étant l'arrière-plan, et
lorsque l'objet cible n'est pas capturé dans le segment et que l'objet cible est capturé dans son segment voisin, considérer le segment et une région entre l'objet cible dans le segment voisin et le segment comme étant l'arrière-plan.

9. Appareil selon la revendication 7, **caractérisé en ce que** chaque segment arbitraire (S1 à S3) a une taille telle qu'elle ne permet pas à l'objet cible d'exister à travers une frontière entre les segments continus.

10. Appareil selon la revendication 7, **caractérisé en ce que**
les moyens de traitement GSTH (4b) exécutent le traitement GSTH sur l'image de capteur de ligne (21) pour créer l'image GSTH (24) dans laquelle la section usée (7a) du fil de contact (7) dans l'image de capteur de ligne (21) est mise en valeur,
les moyens de traitement de suppression d'arrière-plan à base d'écart-type (4f) exécutent le traitement de suppression d'arrière-plan à base d'écart-type sur l'image GSTH (24) pour créer une image à arrière-plan supprimé (32) qui inclut le fil de contact (7) extrait de l'image GSTH (24),
les moyens de traitement de binarisation (4c) exécutent le traitement de binarisation sur l'image à arrière-plan supprimé (32) pour créer l'image binarisée (25), et
les moyens de détection de bords de section usée de fil de contact (4d) détectent les bords (10L, 10R) à partir de l'image binarisée (25).

EP 2 728 304 B1

*Fig.1*

*Fig.2*

EP 2 728 304 B1

*Fig.3(a)*

*Fig.3(b)*

# Fig.4(a)

12

# Fig.4(b)

$S_L$-1

m = 1    12    13-1

$S_L$-2

m = 2    12    13-2

$S_L$-3

m = 3    12    13-3

$S_L$-4

m = 4    12    13-4

m = M    12    13-M(13)

$S_D$-M

# *Fig.5*

14

# *Fig.6*

```
                    START
                      │
                      ▼
         ┌──────────────────────────┐
         │  ACQUIRE LINE SENSOR IMAGE │────── P1
         └──────────────────────────┘
                      │
                      ▼
         ┌──────────────────────────┐
         │  PERFORM GSTH PROCESSING  │────── P2
         └──────────────────────────┘
                      │
                      ▼
         ┌──────────────────────────┐
         │ PERFORM BINARIZATION PROCESSING │────── P3
         └──────────────────────────┘
                      │
                      ▼
         ┌──────────────────────────────────────┐
         │ PERFORM TROLLEY WIRE WORN SECTION EDGE │────── P4
         │         DETECTION PROCESSING           │
         └──────────────────────────────────────┘
                      │
                      ▼
         ┌──────────────────────────────────────┐
         │ PERFORM TROLLEY WIRE WORN SECTION WIDTH │────── P5
         │         CALCULATION PROCESSING          │
         └──────────────────────────────────────┘
                      │
                      ▼
                     END
```

## *Fig.7*

## *Fig.8*

## *Fig.9*

## *Fig.10*

7a

24

## *Fig.11*

7a

25

## *Fig.12*

10L 10R

25

# Fig.13

LINE SENSOR — 2

IMAGE SIGNAL

LINE SENSOR IMAGE CREATING UNIT — 4a

LINE SENSOR IMAGE

MEMORY — M1

MEMORY — M2

LINE SENSOR IMAGE

BACKGROUND REMOVED IMAGE

STANDARD DEVIATION BACKGROUND REMOVAL PROCESSING UNIT — 4f

BACKGROUND REMOVED IMAGE

BINARIZED IMAGE

BINARIZATION PROCESSING UNIT — 4c

BINARIZED IMAGE

EDGE DATA

TROLLEY WIRE WORN SECTION EDGE DETECTING UNIT — 4d

EDGE DATA

TROLLEY WIRE WORN WIDTH DATA

TROLLEY WIRE WORN SECTION WIDTH CALCULATING UNIT — 4e

EP 2 728 304 B1

*Fig.14(a)*

*Fig.14(b)*

*Fig.14(c)*

*Fig.14(d)*

Fig.15(a)

Fig.15(b)

Fig.15(c)

Fig.15(d)

# *Fig.16*

```
        ┌─────────┐
        │  START  │
        └─────────┘
             │
             ▼
┌───────────────────────────────┐
│   ACQUIRE LINE SENSOR IMAGE    │ ──── P11
└───────────────────────────────┘
             │
             ▼
┌───────────────────────────────┐
│    PERFORM STANDARD DEVIATION  │
│  BACKGROUND REMOVAL PROCESSING │ ──── P12
└───────────────────────────────┘
             │
             ▼
┌───────────────────────────────┐
│ PERFORM BINARIZATION PROCESSING│ ──── P13
└───────────────────────────────┘
             │
             ▼
┌─────────────────────────────────────┐
│ PERFORM TROLLEY WIRE WORN SECTION EDGE│ ──── P14
│        DETECTION PROCESSING          │
└─────────────────────────────────────┘
             │
             ▼
┌─────────────────────────────────────┐
│ PERFORM TROLLEY WIRE WORN SECTION WIDTH│ ──── P15
│        CALCULATION PROCESSING         │
└─────────────────────────────────────┘
             │
             ▼
        ┌─────────┐
        │   END   │
        └─────────┘
```

## Fig.17

# Fig.18

```
        ( START )
            │
            ▼
┌───────────────────────────────┐
│  ACQUIRE LINE SENSOR IMAGE     │ ──── P21
└───────────────────────────────┘
            │
            ▼
┌───────────────────────────────┐
│   PERFORM GSTH PROCESSING      │ ──── P22
└───────────────────────────────┘
            │
            ▼
┌───────────────────────────────┐
│  PERFORM STANDARD DEVIATION    │ ──── P23
│  BACKGROUND REMOVAL PROCESSING │
└───────────────────────────────┘
            │
            ▼
┌───────────────────────────────┐
│ PERFORM BINARIZATION PROCESSING│ ──── P24
└───────────────────────────────┘
            │
            ▼
┌───────────────────────────────────┐
│ PERFORM TROLLEY WIRE WORN SECTION  │ ──── P25
│       EDGE DETECTION PROCESSING    │
└───────────────────────────────────┘
            │
            ▼
┌───────────────────────────────────┐
│ PERFORM TROLLEY WIRE WORN SECTION  │ ──── P26
│       WIDTH CALCULATION PROCESSING │
└───────────────────────────────────┘
            │
            ▼
         (  END  )
```

**EP 2 728 304 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007271445 A
- JP 2008089524 A
- JP 2006250775 A